(19) Europäisches Patentamt
European Patent Office
Office européen des brevets

(11) EP 4 306 253 A1

(12) **EUROPEAN PATENT APPLICATION**
published in accordance with Art. 153(4) EPC

(43) Date of publication:
17.01.2024 Bulletin 2024/03

(21) Application number: 22795816.2

(22) Date of filing: 26.04.2022

(51) International Patent Classification (IPC):
B23K 9/00 (2006.01)   B23K 9/073 (2006.01)
B23K 9/16 (2006.01)   B23K 9/167 (2006.01)

(52) Cooperative Patent Classification (CPC):
B23K 9/00; B23K 9/073; B23K 9/16; B23K 9/167

(86) International application number:
PCT/JP2022/018949

(87) International publication number:
WO 2022/230903 (03.11.2022 Gazette 2022/44)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.04.2021 JP 2021076654

(71) Applicant: JFE Steel Corporation
Tokyo 100-0011 (JP)

(72) Inventors:
• KONISHI Kyohei
Tokyo 100-0011 (JP)
• MATSUDA Hiroshi
Tokyo 100-0011 (JP)
• TANIGUCHI Koichi
Tokyo 100-0011 (JP)

(74) Representative: Haseltine Lake Kempner LLP
Bürkleinstrasse 10
80538 München (DE)

(54) **ARC WELDED JOINT AND ARC WELDING METHOD**

(57) An arc welded joint and an arc welding method are provided. The arc welded joint of the present invention has a weld formed by arc welding of an overlap of at least two steel sheets. The weld has a flank angle $\theta$ of $\theta \geq 100°$. In a region extending 2.0 mm from a bead toe of the weld in a weld metal direction and also extending 2.0 mm from the bead toe in a base material direction, the slag-covered area ratio $S_{RATIO}$ calculated by $S_{RATIO}$ = $100 \times S_{SLAG}/S_{TOE}$ is 50% or less wherein $S_{TOE}$ is the bead toe surface area and $S_{SLAG}$ is the slag surface area.

FIG. 4

(A)   (B)

EP 4 306 253 A1

**Description**

Technical Field

The present invention relates to an arc welded joint having excellent fatigue property and suited for, for example, an automobile member, and to an arc welding method for obtaining such the arc welded joint.

Background Art

In recent years, automobiles are increasingly required to satisfy high strength and high rigidity of various members used in automobiles in order to enhance the safety and the reliability of automobile bodies, and to concurrently satisfy light weightiness of members with the aim of improving fuel efficiency. To meet such a need, members are made of thinner steel sheets through the use of high strength steel sheets.

To produce welded joints, a lap fillet arc welding method is widely used in which two steel sheets are overlapped and fillet arc welded together. Various members that are used in automobiles are subjected to environments with repeated loads and thus require sufficient fatigue strength as well as static tensile strength. In particular, members used in a corrosive environment encounter difficulties in maintaining the strength of the members because corroded regions expand with time and also because the corrosion proceeds in the thickness direction to reduce the thickness of the welds in the welded joints and the vicinities of the welds.

For example, a technique that improves the fatigue strength of members is disclosed in Patent Literature 1. In the technique disclosed in Patent Literature 1, a welding wire having a specific chemical composition is used for the welding process to smooth the shape of a weld toe of the weld metal. In this manner, the wetting properties of the molten metal with respect to the base material steel sheets is enhanced.

Citation List

Patent Literature

PTL 1: Japanese Patent No. 3860438

Summary of Invention

Technical Problem

However, the technique disclosed in Patent Literature 1 entails control of the wire composition of the welding wire and thus will not be applicable to all of the numerous types of steel sheets.

When the wire composition includes large amounts of additive alloying elements that form welding slags, electrodeposition coating is inhibited by the attachment of welding slags, and rusting prevention becomes difficult. As a result, corrosion significantly reduces the thickness and deteriorates the shape of the weld toe. A marked loss in fatigue strength is thus expected.

The present invention has been made in view of the problems discussed above. It is therefore an object to provide an arc welded joint that can resist rusting and has excellent fatigue property even in a progressively corrosive environment, and an arc welding method for obtaining such the arc welded joint.

Solution to Problem

In order to solve the problems described above, the present inventors have carried out extensive studies on a technique that suppresses rusting in a weld of steel members and enhances the fatigue property of the weld even in a progressively corrosive environment.

The present inventors have found that the stress concentration in a weld can be reduced and the fatigue property (fatigue strength) can be enhanced by specifying the flank angle at a weld toe of the weld. Furthermore, the present inventors have assumed that rusting can be suppressed and the decrease in fatigue strength stemming from corrosion can be reduced by reducing the amount of welding slags (hereinafter, also written as the "slags") attached to the weld, especially the weld toe.

The present invention has been completed through further studies based on the above findings. A summary of the present invention is as follows.

[1] An arc welded joint having a weld formed by arc welding of an overlap of at least two steel sheets, wherein

the weld has a flank angle $\theta$ (°) of $\theta \geq 100°$, and

in a region extending 2.0 mm from a bead toe of the weld in a weld metal direction and also extending 2.0 mm from the bead toe in a base material direction, the slag-covered area ratio $S_{RATIO}$ (%) calculated by the formula (1) is 50% or less wherein $S_{TOE}$ is the bead toe surface area ($mm^2$) that is the surface area of a weld bead in the region, and $S_{SLAG}$ is the slag surface area ($mm^2$) that is part of the bead toe surface area $S_{TOE}$ and represents the area of a region covered with a slag,

$$S_{RATIO} = 100 \times S_{SLAG}/S_{TOE} \quad \cdots (1).$$

[2] The arc welded joint described in [1], wherein the flank angle in the weld excluding regions extending 15 mm from a bead-start end and from a bead-finish end of the weld bead has a maximum value and a minimum value satisfying the relationship $\theta max - \theta min \leq 30°$ wherein $\theta max$ is the maximum value (°) and $\theta min$ is the minimum value (°) of the flank angle.

[3] An arc welding method for producing an arc welded joint described in [1] or [2], including:

forming a weld by arc welding of an overlap of at least two steel sheets while using a shielding gas including Ar gas and an oxidizing gas, the oxidizing gas satisfying the relationship of the formula (2):

$$2 \times [O_2] + [CO_2] \leq 16 \quad \cdots (2)$$

wherein $[O_2]$ is the vol% of $O_2$ in the shielding gas, and $[CO_2]$ is the vol% of $CO_2$ in the shielding gas, and wherein

I, V, s, and Y satisfy the relationship of the formula (3) :

$$50 \leq (I \times V)/s \times (24 + Y)/24 \leq 200 \quad \cdots (3)$$

wherein I is the average welding current (A), V is the average arc voltage (V), s is the welding speed (cm/min), and Y is the value of $(2 \times [O_2] + [CO_2])$ in the formula (2) in the shielding gas.

[4] The arc welding method described in [3], wherein the shielding gas satisfies the relationship of the formula (4):

$$2 \times [O_2] + [CO_2] \leq 5 \quad \cdots (4)$$

wherein $[O_2]$ is the vol% of $O_2$ in the shielding gas, and $[CO_2]$ is the vol% of $CO_2$ in the shielding gas, and wherein

the steel sheets and a welding wire are intermittently short-circuited during the arc welding, and the average short-circuit frequency $F_{AVE}$ (Hz) during the short-circuit is 20 to 300 Hz and the maximum short-circuit cycle $T_{CYC}$ (s) during the short-circuit is 1.5 s or less.

[5] The arc welding method described in [3] or [4], wherein the arc welding uses a pulse current as a welding current, and

the value of X (A·s/m) calculated by the formula (5) satisfies $50 \leq X \leq 250$ wherein $I_{PEAK}$ is the peak current (A) of the pulse current, $I_{BASE}$ is the base current (A), $t_{PEAK}$ is the peak time (ms), $t_{UP}$ is the rise time (ms), $t_{DOWN}$ is the fall time (ms), and L is the distance (mm) between the steel sheets and a contact tip,

$$X = (I_{PEAK} \times t_{PEAK}/L) + (I_{PEAK} + I_{BASE}) \times (t_{UP} + t_{DOWN})/(2 \times L)$$

$$\cdots (5).$$

[6] The arc welding method described in any one of [3] to [5], wherein the arc welding uses a solid wire as a welding wire.

Advantageous Effects of Invention

According to the present invention, the stress concentration in a weld is reduced by specifying the flank angle at a weld toe, and rusting is suppressed by reducing the coating weight of slags attached to the weld. Thus, an arc welded joint can be obtained that exhibits excellent fatigue property stably even in a progressively corrosive environment. Furthermore, the arc welding method provided according to the present invention can produce such welded joints.

Brief Description of Drawings

[Fig. 1] Fig. 1 is a perspective view schematically illustrating an example in which the present invention is applied to lap fillet welding.
[Fig. 2] Fig. 2(A) and Fig. 2(B) are enlarged schematic sectional views of a welding wire and the vicinity thereof in Fig. 1, illustrating how a short-circuit transfer occurs.
[Fig. 3] Fig. 3 is a perspective view schematically illustrating a weld toe of a weld bead formed by lap fillet welding illustrated in Fig. 1, and start-end and finish-end portions of the weld bead.
[Fig. 4] Fig. 4(A) and Fig. 4(B) are views schematically illustrating a weld in an arc welded joint of the present invention.
[Fig. 5] Fig. 5 is a sectional view of the arc welded joint in Fig. 4(A) taken along the line A-A and schematically illustrates a weld toe and the periphery thereof.
[Fig. 6] Fig. 6 is a graph illustrating an example of the waveform of a pulse current supplied as a welding current.
[Fig. 7] Fig. 7 is a graph illustrating relationships between the flank angle and the post-corrosion fatigue strength.

Description of Embodiments

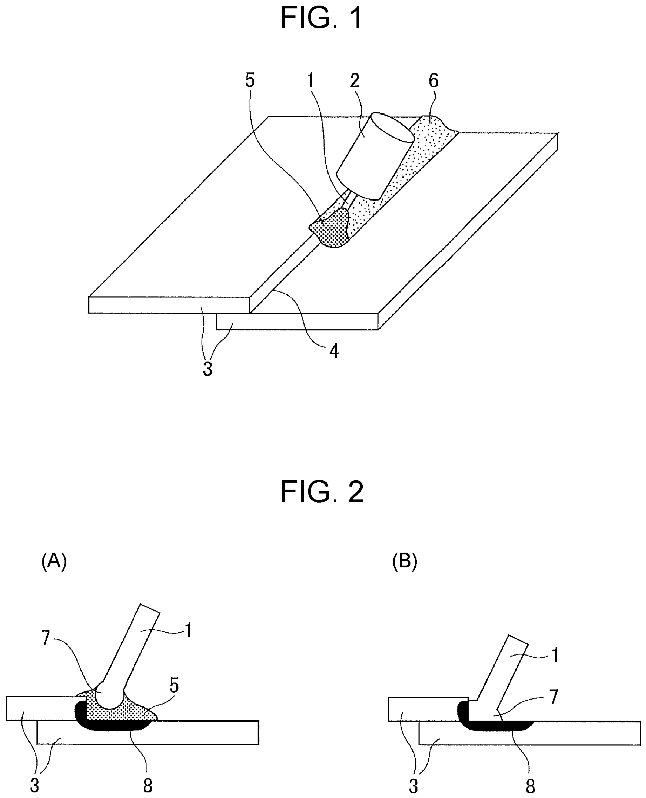

An arc welded joint and an arc welding method of the present invention will be described with reference to Figs. 1 to 7. Here, lap fillet welding is described as an exemplary embodiment of the application of the present invention. However, the present invention is not limited to lap fillet welding and may be applied to various welding techniques (such as, for example, butt welding).

First, a technical concept of the present invention will be described with reference to Fig. 1 to Fig. 3. Fig. 1 to Fig. 3 illustrate an example of lap fillet welding of two steel sheets by arc welding.

For example, as illustrated in Fig. 1, the electrodes in the present invention are steel sheets 3, and a welding wire 1 that is continuously fed from a welding torch 2 to the steel sheets 3 through a central portion of the welding torch 2, and a welding voltage is applied from a welding power source (not shown). Specifically, the phrase "from a welding torch 2 to the steel sheets 3" means "from a welding torch 2 to a weld line defined by a corner 4 of a step formed by the overlapping of the two steel sheets 3 that are the base material". Part of a shielding gas (not shown) supplied from the inside of the welding torch 2 is ionized into plasma, thereby forming an arc 5 between the welding wire 1 and the steel sheets 3. Part of the shielding gas that is not ionized and flows from the welding torch 2 to the steel sheets 3 plays a role of shielding the arc 5 and a molten pool (not shown in Fig. 1) formed by melting of the steel sheets 3 from the outside air. The thermal energy of the arc 5 melts the tip of the welding wire 1 to form droplets, and the droplets are transported to the molten pool by, for example, electromagnetic force or gravity. This phenomenon occurs continuously while the welding torch 2 or the steel sheets 3 are moved. As a result, the molten pool behind the process along the weld line solidifies to form a weld bead 6. In this manner, the two steel sheets are joined together.

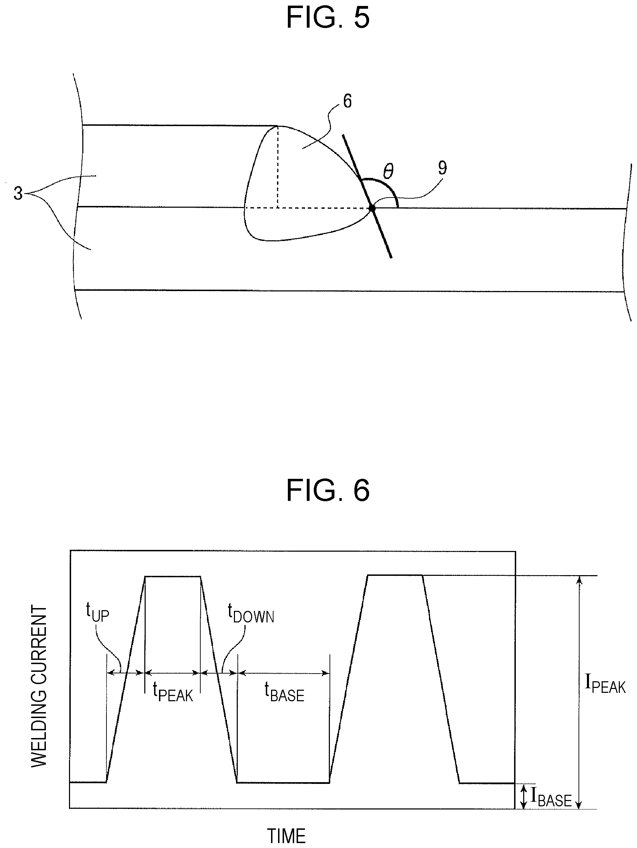

If the arc welded joint formed as described above has a small flank angle of the weld (see Fig. 5), the weld bead is convex and the stress concentration at the weld toe is increased. In order to solve this problem, the present invention specifies the range of the flank angle at the weld toe of the weld. Specifically, it has been found that the stress concentration at the weld can be reduced by controlling the flank angle to 100° or more.

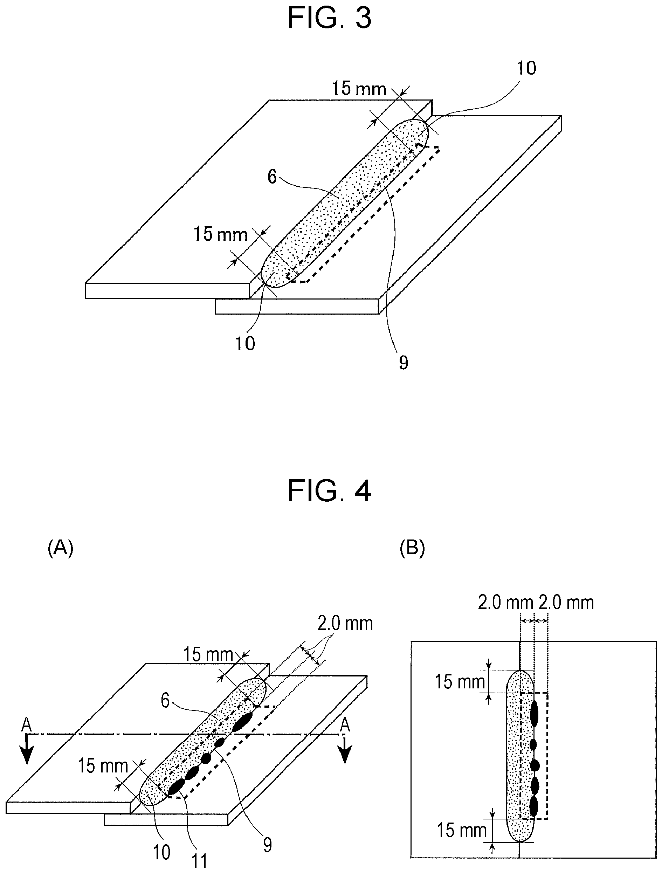

Furthermore, a large variation in the flank angle in the weld is problematic in that stress is highly concentrated locally at locations where the flank angle is minimum. In order to solve this problem, in the present invention, a region of the weld bead 6 excluding bead-start and bead-finish end portions 10 (see Fig. 3) satisfies the above configuration and a difference between the maximum value and the minimum value of the flank angle is specified to be 30° or less. It has been found that the stress concentration in the width direction of the weld bead can be thus further reduced.

Specifically, the present invention is based on a finding that the stress concentration in the weld can be reduced by specifying the flank angle at the weld toe of the weld as described above, and as a result, the fatigue property (fatigue strength) of the weld can be enhanced.

Furthermore, as described hereinabove, the present invention focuses on the suppression of rusting at the weld in order to ensure enhanced fatigue property even in a progressively corrosive environment.

When two steel sheets 3 are overlapped and are lap fillet welded by arc welding as illustrated in Fig. 1, $O_2$ or

$CO_2$ mixed in the shielding gas is heated by the arc 5, and the reaction shown in the formula (6) or the formula (7) proceeds:

$$O_2 \rightarrow 2[O] \cdots \qquad (6)$$

$$CO_2 \rightarrow CO + [O] \cdots \qquad (7)$$

The oxygen generated by the above decomposition reaction dissolves into the molten metal 7 and the molten pool 8 (see Fig. 2(A) and Fig. 2(B)) and remains as bubbles in the weld metal when the melt is cooled and solidifies as the weld metal. Furthermore, the oxidation reaction of iron with oxygen may proceed to deteriorate the mechanical performance of the weld metal.

In order to solve these problems, the welding wire 1 and the steel sheets 3 to which non-ferrous elements, such as Si, Mn, and Ti, are added as deoxidizing agents are used. That is, the reaction between oxygen and iron is suppressed by discharging the oxygen generated by the reaction of the formula (6) or the formula (7) as slags, such as $SiO_2$, MnO, and $TiO_2$.

In the subsequent cooling process, however, the slags discharged to the surface of the molten pool 8 aggregate and solidify while attaching to the surface and the bead toe 9 of the weld bead 6 (see Fig. 3). In such an arc welded joint that bears slags on the bead toe 9, the slag regions are insulators. Thus, even when the steel is subjected to chemical conversion (such as, for example, zinc phosphate treatment), the slag regions are not coated with a chemical conversion layer made of zinc phosphate crystals. The regions exposed from the chemical conversion layer do not allow for sufficient formation of coating films even when treated by electrodeposition coating, or do not allow the coating films to exhibit sufficient adhesion thereto. Thus, corrosion resistance is significantly lowered. As a result, the thickness is lost due to the occurrence of rusting and the progress of corrosion. It is therefore necessary that slag formation be suppressed while avoiding deterioration of the mechanical performance of the weld metal through the addition of deoxidizing agents to the welding wire 1 and the steel sheets 3.

Specifically, the above slag-forming reaction (the oxidation reaction) is suppressed without reducing the amounts of additive elements added to ensure the mechanical performance of the weld metal. For this purpose, the oxidizing gas contained in the shielding gas is specified. The suppression of the slag-forming reaction reduces the occurrence of coating failures in the electrodeposition coating process, thus leading to enhanced corrosion resistance. Consequently, the occurrence of rusting and the progress of corrosion can be prevented even in a corrosive environment.

Specifically, as described above, the present invention specifies the oxidizing gas contained in the shielding gas so that the amount of $O_2$ or $CO_2$ that is mixed is small, and thereby suppresses the formation of slags that are attached to the weld, especially the weld toe. In this manner, it has been found that rusting can be suppressed, and the decrease in fatigue strength due to corrosion can be reduced.

Here, the bead toe 9 and the bead-start and bead-finish end portions 10 of the weld bead 6 will be described with reference to Fig. 3. As illustrated in Fig. 3, the "bead-start and bead-finish end portions" in the present invention indicate regions that include a bead-start end portion and a bead-finish end portion at the respective terminals. The "bead-start end portion" is a region extending 15 mm from the bead-start end (the welding start position) toward the bead-finish end (the welding finish position) on the weld line, and the "bead-finish end portion" is a region extending 15 mm from the bead-finish end toward the bead-start end on the weld line. In the present invention, the "bead toe" indicates a boundary between the weld metal and the unmelted steel sheet that is the base material, located in a direction perpendicular to the weld line of the weld bead. The "weld line" indicates a line parallel to the welding direction in which the weld bead 6 is formed. The "width of the weld bead (the bead width)" indicates the length of a straight line connecting the intersections (two intersections) of a plane of the weld bead 6 perpendicular to the weld line with a bead toe.

Next, the arc welded joint of the present invention will be described with reference to Fig. 4(A) to Fig. 5. Fig. 4(A) illustrates a perspective view of a weld bead 6 in an arc welded joint formed by lap fillet welding of Fig. 1. Fig. 4(B) illustrates a plan view of the arc welded joint. Fig. 5 illustrates an enlarged front view of part of the A-A line cross section of the arc welded joint illustrated in Fig. 4 (A).

As described hereinabove, the arc welded joint of the present invention is an arc welded joint formed by arc welding of an overlap of at least two steel sheets. In the arc welded joint, the weld has a flank angle $\theta$ (°) of $\theta \geq 100°$, and, in a region extending 2.0 mm from a bead toe of the weld in a weld metal direction and also extending 2.0 mm from the bead toe in a base material direction, the slag-covered area ratio $S_{RATIO}$ (%) calculated by the formula (1) is 50% or less wherein $S_{TOE}$ is the bead toe surface area ($mm^2$) that is the surface area of a weld bead in the region, and $S_{SLAG}$ is the slag surface area ($mm^2$) that is part of the bead toe surface area $S_{TOE}$ and represents the area of a region covered with a slag,

$$S_{RATIO} = 100 \times S_{SLAG}/S_{TOE} \cdots (1).$$

Flank angle θ (°) in the weld: θ ≥ 100°

Fig. 5 illustrates a schematic view of the bead toe 9 and the periphery thereof. The angle θ (°) in Fig. 5 is the flank angle of the bead toe 9. If the flank angle θ (°) is less than 100°, the weld bead 6 is convex and the stress concentration at the bead toe 9 is increased. To address this problem, the flank angle θ (°) in the present invention is limited to 100° or more. Increasing the flank angle θ smoothens the bead toe 9 and thus can reduce the stress concentration in the weld. In view of this, the flank angle is preferably 110° or more, and more preferably 120° or more. To avoid an excessively large width of the weld bead, the flank angle θ is preferably 160° or less, more preferably 150° or less, and still more preferably 140° or less.

The flank angle θ may be measured by the method described later in EXAMPLES.

Slag-covered area ratio $S_{RATIO}$ (%): 50% or less

Referring to Fig. 4(A), Fig. 4(B), and Fig. 5, the slag-covered area ratio $S_{RATIO}$ (%) calculated by the formula (1) is 50% or less wherein $S_{TOE}$ is the bead toe surface area ($mm^2$) that is the surface area of a predetermined region of the weld including the bead toe 9, and $S_{SLAG}$ is the slag surface area ($mm^2$) that is part of the bead toe surface area $S_{TOE}$ and represents the area of regions covered with slags 11. If the slags 11 that have been formed during the welding process attach to the surface of the weld bead 6 so as to increase the slag-covered area ratio to more than 50%, a chemical conversion layer is not formed sufficiently even when the arc welded joint is subjected to chemical conversion. Reducing the amount of slag formation leads to less aggregation of the slags on the surface of the weld bead 6. Thus, the slag-covered area ratio $S_{RATIO}$ is preferably 45% or less, and more preferably 40% or less.

As illustrated in Fig. 4(A) and Fig. 4(B), the "bead toe surface area $S_{TOE}$" indicates the surface area of the weld bead 6 in a region extending 2.0 mm from the bead toe 9 of the weld in a weld metal direction perpendicular to the weld line and also extending 2.0 mm from the bead toe 9 in a base material direction perpendicular to the weld line. That is, in the example illustrated in Fig. 4(A) and Fig. 4(B), the bead toe surface area is the surface area of the weld bead 6 in the 4.0 mm region having the bead toe 9 at the center. Furthermore, as illustrated in Fig. 4(A) and Fig. 4(B), the "slag surface area $S_{SLAG}$" indicates the total of the areas of regions covered with the slags 11 in the same region as the bead toe surface area $S_{TOE}$ is measured. The bead toe surface area $S_{TOE}$ and the slag surface area $S_{SLAG}$ may be determined by the method described later in EXAMPLES.

The smaller the amount of non-conductive slags that are formed, the higher the chemical convertibility and the electrodeposition coatability. Thus, a smaller slag-covered area ratio $S_{RATIO}$ is more preferable with no limitation of the lower limit. The slag-covered area ratio $S_{RATIO}$ is preferably 0.1% or more, more preferably 0.50 or more, and still more preferably 1.0% or more.

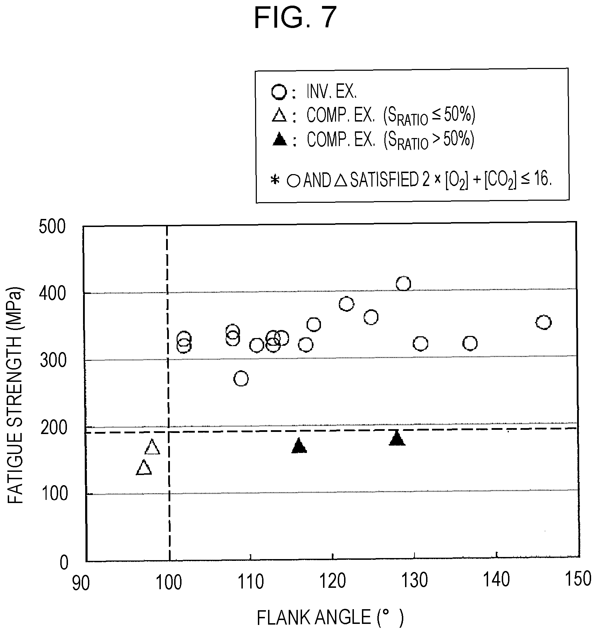

The advantageous effects described hereinabove may be obtained by controlling the flank angle θ and the slag-covered area ratio $S_{RATIO}$ in the weld to the above-described ranges. Fig. 7 shows a graph illustrating relationships between the flank angle and the post-corrosion fatigue strength. While details will be described later, as illustrated in Fig. 7, the fatigue strength may be enhanced by appropriately controlling the flank angle and the slag-covered area ratio $S_{RATIO}$.

As already described, a large variation in the flank angle in the weld is problematic in that stress is highly concentrated locally at locations where the flank angle is minimum. Thus, the above configurations are preferably combined with stabilization of the shape of the weld bead 6. Specifically, as illustrated in Fig. 4(A) and Fig. 4(B), the present invention preferably involves reducing the variation in the flank angle θ in the weld excluding regions (bead-start and bead-finish end portions 10) extending 15 mm from the bead-start end and from the bead-finish end of the weld bead 6. This variation control is described below.

Difference between the maximum value of the flank angle θ and the minimum value of the flank angle θ (a preferred condition)

In a region of the weld excluding the bead-start and bead-finish end portions 10, the flank angle in planes of the weld bead 6 perpendicular to a line parallel to the welding direction (the weld line) preferably has a maximum value and a minimum value satisfying the relationship θmax - θmin ≤ 30° wherein θmax is the maximum value (°) and θmin is the minimum value (°) of the flank angle. The shape of the weld bead 6 is stabilized by reducing the variation in the flank angle of the weld bead (that is, by reducing the difference between θmax and θmin). As a result, local stress concentration is relaxed. Thus, the difference between the maximum value and the minimum value of the flank angle (θmax - θmin) is preferably 25° or less, and more preferably 20° or less.

The lower limit of the difference between the maximum value and the minimum value of the flank angle is not particularly limited. (θmax - θmin) is preferably 0.1° or more, more preferably 0.2° or more, and still more preferably 0.5° or more.

The steel sheets used in the arc welded joint of the present invention are preferably high strength steel sheets having a tensile strength of 440 MPa or more. The tensile strength is preferably 500 MPa or more, and more preferably 900 MPa or more.

Next, an embodiment will be described of the arc welding method for producing the arc welded joint of the present invention. The arc welding is already described hereinabove with reference to Fig. 1, and thus the description thereof will be omitted here.

In the present invention, the arc welding conditions are controlled as described below. This control is important in order to ensure that the flank angle $\theta$ (°) and the slag-covered area ratio $S_{RATIO}$ (%) in the arc welded joint will fall in the above-described ranges.

The arc welding of the present invention involves a shielding gas including Ar gas and an oxidizing gas, and the oxidizing gas satisfies the relationship of the formula (2):

$$2 \times [O_2] + [CO_2] \leq 16 \cdots (2).$$

In the formula (2), $[O_2]$ is the vol% of $O_2$ in the shielding gas, and $[CO_2]$ is the vol% of $CO_2$ in the shielding gas. In addition to this condition, the arc welding is controlled so that I, V, s, and Y satisfy the relationship of the formula (3):

$$50 \leq (I \times V)/s \times (24 + Y)/24 \leq 200 \cdots (3)$$

wherein I is the average welding current (A), V is the average arc voltage (V), s is the welding speed (cm/min), and Y is the value of ($2 \times [O_2]$ + $[CO_2]$ ) in the formula (2) in the shielding gas.

Referring to Y in the formula (3) that describes the shielding gas, $[O_2]$ is the vol% of $O_2$ in the shielding gas, and $[CO_2]$ is the vol% of $CO_2$ in the shielding gas.

If the value in the middle of the formula (3) (that is, the value calculated by (($I \times V$)/s $\times$ (24 + Y)/24)) is less than 50, the amount of heat input is so small that the weld cools at a high cooling rate. As a result, the weld bead becomes narrow in bead width and convex in shape. Thus, the value in the middle of the formula (3) is limited to 50 or more. In order to ensure the amount of heat input, the value in the middle of the formula (3) is preferably 60 or more, and more preferably 75 or more.

If, on the other hand, the value in the middle of the formula (3) is more than 200, the amount of heat input is excessively large. As a result, burn-through may occur or the amount of deposits is so increased that the weld bead may become convex. Thus, the value in the middle of the formula (3) is limited to 200 or less. The value in the middle of the formula (3) is preferably 190 or less, more preferably 180 or less, and still more preferably 170 or less.

The "average welding current I" and the "average arc voltage V" indicate the average of the welding current values and the average of the arc voltage values in each welding pass.

For example, preferred ranges of the welding conditions are average welding current I: 100 to 300 A, average arc voltage V: 10 to 30 V, and welding speed s: 30 to 150 cm/min. To create these conditions, the distance between the contact tip and the workpieces (hereinafter, written as the "CTWD") is more preferably 5 to 30 mm. More preferably, the average welding current I is 150 A or more, and the average welding current I is 260 A or less. More preferably, the average arc voltage V is 15 V or more, and the average arc voltage V is 28 V or less. More preferably, the welding speed s is 35 cm/min or more, and the welding speed s is 130 cm/min or less. More preferably, the CTWD is 8 mm or more, and the CTWD is 20 mm or less.

When the arc welding is performed in reverse polarity, the welding wire 1 serves as the anode and the steel sheets 3 as the cathode (see Fig. 1). A welding voltage is applied from the welding wire 1 that is continuously fed to the steel sheets 3 through a central portion of the welding torch 2, and part of the shielding gas supplied from the inside of the welding torch 2 is ionized into plasma. Consequently, an arc 5 is formed between the welding wire 1 and the steel sheets 3. The remainder of the shielding gas (that is, the gas that is not ionized and flows from the welding torch 2 to the steel sheets 3) shields the arc 5, the molten metal 7, and the molten pool 8 from the outside air (see Fig. 2(A) and Fig. 2(B)). In this manner, the remainder gas plays a role of preventing mixing of oxygen (and consequent slag formation) and mixing of nitrogen (and consequent blowhole formation).

The tip of the welding wire 1 is melted by the thermal energy of the arc 5 to form a molten metal 7, and the droplets are transported to the molten pool 8 by electromagnetic force or gravity. This process takes place while regularly repeating cycles in which the molten metal 7 is separate from the molten pool 8 (see Fig. 2(A)) and the molten metal 7 comes into contact with the molten pool 8 and is electrically short-circuited (see Fig. 2(B)). This phenomenon is caused to occur continuously while moving the welding wire 1 along the weld line. As a result, the molten pool 8 behind the weld line solidifies to form a weld bead 6.

The formation of slags is effectively prevented by specifying the oxidizing gas contained in the shielding gas and thereby reducing the amount of oxygen mixed into the molten metal 7 and the molten pool 8.

In order to obtain the above effects more effectively, the present invention specifies that the "shielding gas" in the welding conditions described above is a shielding gas including Ar gas and an oxidizing gas, and the oxidizing gas satisfies the relationship of the formula (2). If the left-side value in the formula (2) (that is, the value calculated by ($2 \times$ $[O_2] + [CO_2]$)) exceeds 16, the arc shrinks and tends to form a convex weld bead, and consequently the flank angle at the weld toe may be increased. Thus, the left-side value in the formula (2) is limited to 16 or less. The left-side value in the formula (2) is preferably 10 or less, and more preferably 5 or less. The left-side value in the formula (2) is preferably 0.005 or more.

In the present invention, the effects described above may be obtained even when the shielding gas is 100% Ar gas. The "100% Ar gas" means when the Ar purity is 99.99% or more, and the shielding gas incidentally includes less than 0.01% of an oxidizing gas.

In the present invention, the arc welding conditions are controlled as described above, and thereby the arc welded joint can be obtained with the weld described hereinabove. In order to obtain the advantageous effects of the present invention more effectively, the following welding conditions may be added to the above welding conditions.

Arc welding with a reduced amount of an oxidizing gas in the shielding gas generates less slags. On the other hand, cathode spots move around so actively that the weld bead 6 may easily meander or become wavy.

In order to eliminate this drawback, the present invention is preferably carried out in such a manner that the shielding gas condition represented by the formula (2) is further limited to the use of a shielding gas satisfying the relationship of the formula (4), and, in addition to this condition, the welding wire 1 and the steel sheets 3 are intermittently short-circuit during the arc welding, and the maximum value of the cycles for which the short-circuits occur (hereinafter, written as the "short-circuit cycles") and the average value of the frequencies at which the short-circuits occur (hereinafter, written as the "short-circuit frequencies) are controlled as follows. Specifically, the maximum value of the short-circuit cycles (the maximum short-circuit cycle) $T_{CYC}$ (s) is preferably controlled to 1.5 s or less, and the average value of the short-circuit frequencies (the average short-circuit frequency) $F_{AVE}$ (Hz) is preferably controlled to 20 to 300 Hz.

$$2 \times [O_2] + [CO_2] \leq 5 \quad \cdots (4)$$

In the formula (4), $[O_2]$ is the vol% of $O_2$ in the shielding gas, and $[CO_2]$ is the vol% of $CO_2$ in the shielding gas.

If the left-side value in the formula (4) (that is, the value calculated by ($2 \times [O_2] + [CO_2]$) ) exceeds 5, more oxygen is mixed into the molten metal 7 and the molten pool 8 and more slags attach to the weld bead surface. As a result, chemical convertibility and electrodeposition coatability may be poor as compared to when the formula (4) is satisfied. Thus, the left-side value in the formula (4) is limited to 5 or less. The left-side value in the formula (4) is preferably 3 or less. The left-side value in the formula (4) is preferably 0.005 or more.

When the shielding gas satisfies the formula (4), the welding wire 1 and the steel sheets 3 are intermittently short-circuited during the arc welding and the short-circuit is controlled to satisfy the above conditions. The reasons are as described below.

The molten pool 8 is destabilized when the volume of the droplets coming from the tip of the welding wire 1 is too large or too small.

Specifically, if the average short-circuit frequency $F_{AVE}$ is less than 20 Hz, large droplets move to the molten pool 8, or the droplets irregularly exhibit a transfer mode other than the short-circuit transfer (such as, for example, streaming transfer). If, on the other hand, the average short-circuit frequency $F_{AVE}$ is more than 300 Hz, the droplets are small but the arc is re-ignited too often by the short-circuit. For these reasons, the molten pool 8 is disturbed in any of the above cases to make it difficult to eliminate meandering and waving of the weld bead. By controlling the average short-circuit frequency $F_{AVE}$ to 20 to 300 Hz, the volume of a droplet transported to the molten pool 8 by one short-circuit may be substantially equalized to the volume of a sphere having the same diameter as the welding wire 1. As a result, the metal transfer can be stabilized and also the amounts of deposition can be uniformed. Thus, an appropriate flank angle can be obtained stably. For this reason, the average short-circuit frequency $F_{AVE}$ (Hz) of short-circuit in the present invention is preferably controlled to 20 to 300 Hz.

In order to equalize the volumes of the droplets transported to the molten pool 8 per short-circuit and to enhance the uniformity of the weld bead, the average short-circuit frequency $F_{AVE}$ is more preferably 35 Hz or more, and still more preferably 50 Hz or more. If the average short-circuit frequency $F_{AVE}$ is high, small-volume droplets may scatter as a large amount of spatters during short-circuit and re-ignition. Thus, the average short-circuit frequency $F_{AVE}$ is more preferably 250 Hz or less, still more preferably 200 Hz or less, and even more preferably 190 Hz or less.

The "average short-circuit frequency $F_{AVE}$" indicates the average value of short-circuit frequencies in a welding pass performed to obtain the arc welded joint. The arc voltage is tracked during the welding pass with a measuring device (such as, for example, an oscilloscope) to count the number of the arc voltage becoming zero. The number is divided by the time (s) required for the welding to give the "average short-circuit frequency" (times/s = Hz).

If the maximum short-circuit cycle $T_{CYC}$ is more than 1.5 s, the metal transfer is destabilized to result in unstable bead widths and unstable penetration depths. That is, a weld bead 6 having a good shape can be obtained by controlling the maximum short-circuit cycle $T_{CYC}$ to 1.5 s or less. Thus, in the present invention, it is preferable that the maximum short-circuit cycle $T_{CYC}$ of short-circuit be controlled to 1.5 s or less.

The "maximum short-circuit cycle $T_{CYC}$" indicates the maximum value of the short-circuit cycles in a welding pass performed to obtain the arc welded joint. That is, the term means that each of the short-circuit cycles in the welding pass does not exceed 1.5 s.

In order to ensure that the average short-circuit frequency $F_{AVE}$ is 20 Hz or more, it is more preferable that the maximum short-circuit cycle $T_{CYC}$ be 0.5 s or less, still more preferably 0.2 s or less, and even more preferably 0.1 s or less. The maximum short-circuit cycle $T_{CYC}$ of short-circuit is appropriately such that the average short-circuit frequency $F_{AVE}$ is 300 Hz or less. Thus, the lower limit of the maximum short-circuit cycle $T_{CYC}$ is not particularly limited. The maximum short-circuit cycle $T_{CYC}$ is preferably 0.004 s or more, and more preferably 0.008 s or more.

The above control of the average short-circuit frequency $F_{AVE}$ and the maximum short-circuit cycle $T_{CYC}$ to fall in the predetermined ranges ensures that the droplets move regularly and stably in the arc welding using a shielding gas that includes Ar shielding gas and a reduced amount of an oxidizing gas. In cases other than short-circuit, the arc fluctuates significantly and the metal transfer is unstable, with the result that the bead may have a large variation in flank angle. Slag formation is suppressed and stable arc discharge is achieved at the same time by controlling the average short-circuit frequency $F_{AVE}$ and the maximum short-circuit cycle $T_{CYC}$ to fall in the predetermined ranges as described above, and thereby realizing regular and stable metal transfer. As a result, the weld bead 6 that can attain a flank angle and a slag-covered area ratio $S_{RATIO}$ within the ranges described above is obtained.

For example, preferred ranges of the welding conditions are average welding current I: 150 to 300 A, average arc voltage V: 20 to 35 V, Ar gas flow rate: 10 to 25 Liters/min, and CTWD: 5 to 30 mm.

In the present invention, the average short-circuit frequency and the maximum short-circuit cycle may be controlled to fall in the above ranges in any manner without limitation.

For example, it is preferable to control the current waveform by application of a pulse current as illustrated in Fig. 6. Specifically, control is made so that the value of X (A·s/m) calculated by the formula (5) will satisfy $50 \le X \le 250$ wherein $I_{PEAK}$ is the peak current (A) of the pulse current, $I_{BASE}$ is the base current (A), $T_{PEAK}$ is the peak time (ms), $t_{UP}$ is the rise time (ms), $t_{DOWN}$ is the fall time (ms), and L is the CTWD (mm). In this manner, stable metal transfer can be realized, and the weld bead 6 that has a flank angle and a slag-covered area ratio $S_{RATIO}$ within the ranges described above can be obtained more effectively.

$$X = (I_{PEAK} \times t_{PEAK}/L) + (I_{PEAK} + I_{BASE}) \times (t_{UP} + t_{DOWN})/(2 \times L)$$

$$\cdots (5)$$

The formula (5) expresses the control of current waveform by application of a pulse current as illustrated in Fig. 6. If the value of X (A·s/m) calculated by the formula (5) is too small, the arc 5 may sway and the metal transfer may be destabilized. If, on the other hand, the value of X is too large, the welding wire 1 may be dipped into the molten pool 8, or droplets that have grown may be scattered during short-circuit to, for example, deteriorate the bead shape or to be attached as spatters. Thus, the value of X is preferably controlled to satisfy $50 \le X \le 250$. The value of X is more preferably 60 or more, still more preferably 80 or more, and even more preferably 100 or more. The value of X is more preferably 230 or less, still more preferably 200 or less, and even more preferably 180 or less. Incidentally, "s" in the unit of X (A·s/m) is seconds (sec), and "ms" in the unit of $t_{PEAK}$, $t_{UP}$, and $t_{DOWN}$ is milliseconds (= 1/1000 sec).

If the value of the distance L between the steel sheets 3 and the contact tip is too small, the welding torch 2 is severely worn and the welding is destabilized. If the value is too large, the arc 5 sways. Thus, the value of L in the formula (5) is preferably 5 to 30 mm. The value of L is more preferably 8 mm or more. The value of L is more preferably 20 mm or less.

If the value of $I_{PEAK}$ is too small, a sufficient heat input cannot be ensured, and the bead shape is deteriorated. If the value is too large, burn-through occurs or spatters are increased. Thus, the value of $I_{PEAK}$ in the formula (5) is preferably 250 to 600 A. $I_{PEAK}$ is more preferably 400 A or more. $I_{PEAK}$ is more preferably 500 A or less.

If the value of $I_{BASE}$ is too small, the arc is destabilized. If the value is too large, burn-through occurs. Thus, the value of $I_{BASE}$ in the formula (5) is preferably 30 to 120 A. $I_{BASE}$ is more preferably 40 A or more. $I_{BASE}$ is more preferably 100 A or less.

If the value of $t_{PEAK}$ is too small, a sufficient heat input cannot be ensured. If the value is too large, burn-through occurs. Thus, the value of $t_{PEAK}$ in the formula (5) is preferably 0.1 to 5.0 ms. $t_{PEAK}$ is more preferably 1.0 ms or more. $t_{PEAK}$ is more preferably 4.0 ms or less.

If $t_{UP}$ and $t_{DOWN}$ are too small, the arc sways. If the values are too large, the bead shape is deteriorated. Thus, the values of $t_{UP}$ and $t_{DOWN}$ in the formula (5) are preferably each 0.1 to 3.0 ms. $t_{UP}$ and $t_{DOWN}$ are more preferably each 0.5 ms or more. $t_{UP}$ and $t_{DOWN}$ are more preferably each 2.5 ms or less.

Although not used in the formula (5) for calculating the value of X, the base time of the pulse current may be written as $t_{BASE}$ (ms). If $t_{BASE}$ is too small, the droplets are too small. If the value is too large, the droplets are too big. In both cases, the welding is destabilized. Thus, $t_{BASE}$ is preferably 0.1 to 10.0 ms. $t_{BASE}$ is more preferably 1.0 ms or more, and still more preferably 1.5 ms or more. $t_{BASE}$ is more preferably 8.0 ms or less, and still more preferably 6.0 ms or less.

In the present invention, it is not necessary that one short-circuit occur in each cycle of the pulse current, and one short-circuit may be caused to occur in one pulse to several pulses. The pulse frequency of the pulse current is not particularly limited as long as one short-circuit can occur in one pulse to several pulses.

In the present invention, the controlling of the pulse current intends (1) to promote stable growth of droplets while suppressing swaying of the arc by keeping the current low during the base time, and (2) to promote short-circuit by pushing the droplet that has grown down into the molten pool, not detaching the grown droplet from the wire, by electromagnetic force and the shearing force of the Ar shielding gas during a period from the peak time to the fall time.

The arc welding method of the present invention does not require a supply of oxygen or the addition of special elements. Thus, the process cost can be lowered by using, as the welding wire, a solid wire that is less expensive than a flux-cored wire. In the present invention, the wire composition (the wire chemical composition) of the solid wire is not particularly limited.

For example, a suitable solid wire is a solid wire that contains C: 0.020 to 0.150 mass%, Si: 0.20 to 1.00 mass%, Mn: 0.50 to 2.50 mass%, P: 0.020 mass% or less, and S: 0.03 mass% or less. Such a wire composition, with appropriate control of the composition, can be applied to arc welding of a wide variety of steel types from mild steels to ultrahigh tensile strength steels. The diameter of the solid wire is preferably 0.4 mm to 2.0 mm.

The reasons will be described below as to why the above wire composition of the solid wire is preferable.

C: 0.020 to 0.150 mass%

Carbon is an element that is necessary to ensure the strength of the weld metal, and lowers the viscosity of the molten metal to effectively enhance the fluidity. If, however, the C content is less than 0.020 mass%, the strength of the weld metal cannot be ensured. If, on the other hand, the C content exceeds 0.150 mass%, the toughness of the weld metal is lowered. Thus, the C content is preferably 0.020 to 0.150 mass%.

Si: 0.20 to 1.00 mass%

Silicon is an element that has a deoxidizing effect and, by being added in an appropriate amount, enhances the hardenability of the weld metal to contribute to enhancements in the toughness and the strength of the weld metal. In MIG welding, mixing of oxygen into the weld metal can be eliminated or reduced by the Ar shielding gas, and the deoxidizing action of Si is not particularly necessary. If, however, the Si content is less than 0.20 mass%, the droplets and the molten pool oscillate during the welding process to generate a large amount of spatters. If, on the other hand, the Si content exceeds 1.00 mass%, the toughness of the weld metal is lowered. Thus, the Si content is preferably 0.20 to 1.00 mass%.

Mn: 0.50 to 2.50 mass%

Manganese is an element that has a deoxidizing effect similarly to Si and enhances mechanical properties of the weld metal. If, however, the Mn content is less than 0.50 mass%, a sufficient amount of Mn does not remain in the weld metal and sufficient strength and toughness cannot be obtained. If, on the other hand, the Mn content exceeds 2.50 mass%, the toughness of the weld metal is lowered. Thus, the Mn content is preferably 0.50 to 2.50 mass%.

P: 0.020 mass% or less

Phosphorus is an element that is mixed as an impurity into steel during the steelmaking process and the casting process. This element lowers the hot cracking resistance of the weld metal and is preferably removed as much as possible. If, in particular, the P content exceeds 0.020 mass%, the hot cracking resistance of the weld metal is markedly lowered. Thus, the P content is preferably 0.020 mass% or less.

S: 0.03 mass% or less

Sulfur is an impurity that is incidentally mixed into the steel wires. This element lowers the hot cracking resistance of the weld metal and is preferably removed as much as possible. If, in particular, the S content exceeds 0.03 mass%, hot cracking occurs easily in the weld metal. Thus, the S content is preferably 0.03 mass% or less.

In addition to the above wire composition, the solid wire may appropriately contain one, or two or more selected from Ni, Cr, Ti, and Mo as needed.

Nickel is an element that increases the strength of the weld metal and enhances the weather resistance. However, the above effects cannot be obtained if the Ni content is less than 0.02 mass%. If, on the other hand, the Ni content exceeds 3.50 mass%, the toughness of the weld metal is lowered. Thus, when nickel is added, the Ni content is preferably 0.02 to 3.50 mass%.

Similar to nickel, chromium is an element that increases the strength of the weld metal and enhances the weather resistance. However, the above effects cannot be obtained if the Cr content is less than 0.01 mass%. If, on the other hand, the Cr content exceeds 1.50 mass%, the toughness of the weld metal is lowered. Thus, when chromium is added, the Cr content is preferably 0.01 to 1.50 mass%.

Titanium is an element that acts as a deoxidizing agent and enhances the strength and the toughness of the weld metal. Furthermore, titanium also has an effect of stabilizing the arc and reducing the amount of spatters. If, however, the Ti content exceeds 0.15 mass%, the droplets are coarsened during the welding process and large spatters are generated, and further the toughness of the weld metal is markedly lowered. Thus, when titanium is added, the Ti content is preferably 0.15 mass% or less.

Molybdenum is an element that enhances the strength of the weld metal. If the content thereof exceeds 0.8 mass%, the toughness of the weld metal is lowered. Thus, when molybdenum is added, the Mo content is preferably 0.8 mass% or less.

The balance of the wire composition of the solid wire is Fe and incidental impurities.

Examples of the incidental impurities in the wire composition include N and Cu. Nitrogen is an impurity that is incidentally mixed at the stage of making the steel material and the stage of producing the steel wires, and adversely affects the toughness of the weld metal. Thus, the N content is preferably lowered to 0.01 mass% or less. Copper is an impurity that is incidentally mixed into the steel wires. This element lowers the toughness of the weld metal. If, in particular, the Cu content exceeds 3.0 mass%, the toughness of the weld metal is markedly lowered. Thus, the Cu content is preferably 3.0 mass% or less.

As described hereinabove, the present invention suppresses rusting in the weld of steel members and can enhance the fatigue property of the weld even in a progressively corrosive environment. In particular, the success in rust suppression makes unlikely a change in weld shape even in a corrosive environment, thus allowing the flank angle to be maintained. Furthermore, according to the present invention, members having the characteristics described above can be manufactured using high strength steel sheets having a tensile strength of, for example, 440 MPa or more (for example, 440 MPa, 590 MPa, and 980 MPa grade steel sheets). The use of such high strength steel sheets allows for thickness reduction of the members.

The present invention is suitably used for such members as automobile members. It is therefore preferable that the thickness of the high strength steel sheets be 0.8 to 4 mm.

EXAMPLES

EXAMPLES of the present invention will be described below.

First, two steel sheets shown in Table 1 were subjected to lap fillet welding illustrated in Fig. 1, and an arc welded joint was fabricated. The welding conditions are shown in Table 2. The Ar gas flow rate was controlled appropriately in the range of 10 to 25 Liters/min. The welding wires, indicated by the "Wire symbol" in Table 2, were solid wires that had a wire composition shown in Table 4 and had a welding wire diameter of 1.2 mm. Components that are not found in the "Welding wire chemical composition" in Table 4 are the balance (Fe and incidental impurities). The wire symbol "W1" shown in Table 4 contains 0.005 mass% N and 0.27 mass% Cu as incidental impurities in the wire composition.

The arc welded joints fabricated were subjected to alkali degreasing, surface conditioning, and zinc phosphate chemical conversion. Cationic electrodeposition coating was performed under conditions such that the film thickness at the flat portions of the base material except the weld was 15 um. Subsequently, 60 cycles of the SAE J2334 corrosion test were performed.

The shape of the weld bead after the welding process was evaluated as follows.

[Slag-covered area ratio $S_{RATIO}$]

The surface of a region of the weld bead 6 excluding the bead-start and bead-finish end portions 10 (each 15 mm in length) of the weld bead 6 was photographed from directly above (magnification: $\times$ 5). Based on the obtained photograph image, the projected areas from above of the weld bead and the slags were measured to calculate the bead toe surface area $S_{TOE}$ and the slag surface area $S_{SLAG}$, respectively. As illustrated in Fig. 4(A), Fig. 4(B), and Fig. 5, the bead toe surface area $S_{TOE}$ (mm$^2$) was the surface area of the weld bead 6 in a region extending 2.0 mm from the bead toe 9 in the weld metal direction and also extending 2.0 mm from the bead toe 9 in the base material direction. Of this bead toe surface area $S_{TOE}$, the total of the areas of regions covered with the slags 11 was taken as the slag surface area $S_{SLAG}$ (mm$^2$) .

When the length of the weld bead 6 was less than 130 mm, the surface over the entire length excluding the bead-start and bead-finish end portions 10 was photographed. When the length of the weld bead 6 was 130 mm or more, the surface of a randomly selected region (100 mm in length) of the weld bead 6 excluding the bead-start and bead-finish end portions 10 was photographed. Slags with a total length of 0.5 mm or less were excluded from the calculation.

The slag-covered area ratio $S_{RATIO}$ was determined using the calculated values of the bead toe surface area $S_{TOE}$ and the slag surface area $S_{SLAG}$, and the formula (1) described hereinabove. Table 3 shows the obtained slag-covered area ratios $S_{RATIO}$.

[Flank angle $\theta$]

The flank angle $\theta$ was measured in a region of the weld bead 6 excluding the bead-start and bead-finish end portions 10 (each 15 mm in length), with respect to randomly selected eight through-thickness cross sections of the weld bead 6 perpendicular to the weld line. The eight cross sections were randomly selected from locations separate from one another by 5 mm or more. Here, the weld bead was cut at the random locations in the thickness direction perpendicular to the weld line, and the flank angles at the locations were measured. The results were averaged to determine the "flank angle $\theta$ (°)".

[Maximum value and minimum value of flank angle $\theta$]

Of the flank angles $\theta$ measured at the random eight locations by the flank angle $\theta$ measurement method described above, the maximum value was taken as the "maximum value $\theta$max (°) of the flank angle $\theta$", and the minimum value was obtained as the "minimum value $\theta$min (°) of the flank angle $\theta$". The maximum value $\theta$max and the minimum value $\theta$min of the flank angle are shown in Table 3.

"Fatigue strength" shown in Table 3 was evaluated as follows.

First, the arc welded joint after the corrosion test was immersed into a submerge stripping agent to strip the electrodeposition coating film, and subsequently the corrosion products were removed in accordance with ISO 8407. Next, a fatigue strength test specimen having a width between parallel sides of 22 mm was obtained by machining in such a manner that the weld toe (the bead toe 9) would be the center in the longitudinal direction. The fatigue strength test specimen thus fabricated was subjected to a pulsating bending fatigue test. The loads applied to the fatigue strength test specimen were 100 to 500 MPa, the repetition frequency was 20 Hz, and the number of repetitions was 1,000,000. The strength (the post-corrosion fatigue strength) (MPa) obtained by this bending fatigue test is described as fatigue strength in Table 3.

The post-corrosion fatigue strength was evaluated according to the following criteria and was rated as A, B, or F. Rating "A" shown in Table 3 was given when "the post-corrosion fatigue strength was 320 MPa or more". Rating "B" was given when "the post-corrosion fatigue strength was 190 MPa or more and less than 320 MPa". Rating was "F" when "the post-corrosion fatigue strength was less than 190 MPa". Rating A was best, followed by the rating B. Ratings A and B were evaluated as "acceptable", and rating F was evaluated as "failed". The evaluation results are shown in Table 3.

"Rusting prevention" shown in Table 3 was evaluated as follows.

In the welded joint after the accelerated corrosion test, the surface of a region of the weld bead 6 excluding the bead-start and bead-finish end portions 10 (each 15 mm in length) of the weld bead 6 was photographed from directly above (see Fig. 3). The average rust area per unit length (mm$^2$/10 mm) was calculated. The obtained values are shown in Table 3.

Here, the rusting prevention was evaluated according to the following criteria.

The post-corrosion antirust effect was evaluated as very good when the average rust area was larger than 95 (mm$^2$/10 mm) and 100 (mm$^2$/10 mm) or less. Furthermore, the post-corrosion antirust effect was evaluated as excellent when the average rust area was larger than 50 (mm$^2$/10 mm) and 95 (mm$^2$/10 mm) or less. Furthermore, the post-corrosion antirust effect was evaluated as superior when the average rust area was 50 (mm$^2$/10 mm) or less.

[Table 1]

| Steel sheet | Tensile strength (MPa) | Thickness (mm) |
|---|---|---|
| a | 440 | 2.6 |
| b | 590 | 2.6 |

(continued)

| Steel sheet | Tensile strength (MPa) | Thickness (mm) |
|---|---|---|
| c | 980 | 2.6 |
| d | 980 | 1.0 |
| e | 980 | 3.2 |

[Table 2]

| No. | Shielding gas Components | Shielding gas Value of $2\times[O_2]+[CO_2]$ | Pulse | Average welding current I (A) | Average arc voltage V (V) | Pulse frequency (Hz) | Welding speeds (cm/min) | Steel sheets | Shielding gas Y | L (mm) | Ar gas flow rate (L/min) | Value in the middle of Formula (3) | Metal transfer mode | Wire symbol | $F_{AVE}$ (Hz) | $T_{CYC}$ (s) | $I_{PEAK}$ (A) | $I_{BASE}$ (A) | (PEAK (ms) | tup (ms) | $t_{DOWN}$ (ms) | (BASE (ms) | X (A·s/m) | Remarks |
|---|---|---|---|---|---|---|---|---|---|---|---|---|---|---|---|---|---|---|---|---|---|---|---|---|
| 1 | 100%Ar | 0 | Yes | 237 | 27 | 185 | 70 | c | 0 | 5 | 15 | 91 | Short-circuit | W1 | 47 | 0.06 | 450 | 50 | 1.5 | 1.0 | 1.0 | 1.9 | 118 | INV. EX. |
| 2 | 100%Ar | 0 | Yes | 244 | 25 | 156 | 70 | b | 0 | 15 | 20 | 87 | Short-circuit | W2 | 102 | 0.01 | 500 | 80 | 1.5 | 0.5 | 0.5 | 3.9 | 89 | INV. EX. |
| 3 | Ar-3%CO$_2$ | 3 | Yes | 222 | 23 | 140 | 70 | c | 3 | 10 | 20 | 82 | Short-circuit | W3 | 55 | 0.07 | 500 | 50 | 1.5 | 1.0 | 1.0 | 3.6 | 130 | INV. EX. |
| 4 | Ar-3%CO$_2$ | 3 | No | 167 | 20 | - | 50 | b | 3 | 20 | 20 | 75 | Not short-circuit | W2 | - | - | - | - | - | - | - | - | - | INV. EX. |
| 5 | Ar-2%O$_2$ | 4 | No | 197 | 19 | - | 70 | c | 4 | 15 | 20 | 62 | Not short-circuit | W2 | - | - | - | - | - | - | - | - | - | INV. EX. |
| 6 | Ar-15%CO$_2$ | 15 | No | 180 | 14 | - | 70 | c | 15 | 25 | 20 | 59 | Not short-circuit | W2 | - | - | - | - | - | - | - | - | - | INV. EX. |
| 7 | 100%Ar | 0 | Yes | 242 | 26 | 134 | 120 | b | 0 | 15 | 15 | 52 | Short-circuit | W2 | 82 | 0.03 | 550 | 50 | 4.0 | 1.0 | 1.0 | 1.5 | 187 | INV. EX. |
| 8 | 100%Ar | 0 | Yes | 220 | 24 | 110 | 30 | c | 0 | 15 | 20 | 176 | Short-circuit | W2 | 61 | 0.07 | 550 | 50 | 2.0 | 1.0 | 1.0 | 5.1 | 113 | INV. EX. |
| 9 | 100%Ar | 0 | Yes | 252 | 18 | 233 | 70 | c | 0 | 10 | 10 | 65 | Short-circuit | W2 | 293 | 0.005 | 450 | 50 | 0.5 | 1.0 | 1.0 | 1.8 | 73 | INV. EX. |
| 10 | 100%Ar | 0 | Yes | 234 | 22 | 92 | 70 | b | 0 | 10 | 15 | 74 | Short-circuit | W2 | 219 | 0.005 | 450 | 50 | 2.0 | 3.0 | 3.0 | 2.9 | 240 | INV. EX. |

(continued)

| No. | Shielding gas Components | Shielding gas Value of 2×[O2]+[CO2] | Pulse | Average welding current I (A) | Average arc voltage V (V) | Pulse frequency (Hz) | Welding speeds (cm/min) | Steel sheets | Shielding gas Y | L (mm) | Ar gas flow rate (L/min) | Value in the middle of Formula (3) | Metal transfer mode | Wire symbol | $F_{AVE}$ (Hz) | $T_{CYC}$ (s) | $I_{PEAK}$ (A) | $I_{BASE}$ (A) | t(PEAK) (ms) | tup (ms) | $t_{DOWN}$ (ms) | t(BASE) (ms) | X (A·s/m) | Remarks |
|---|---|---|---|---|---|---|---|---|---|---|---|---|---|---|---|---|---|---|---|---|---|---|---|---|
| 11 | 100%Ar | 0 | Yes | 237 | 23 | 125 | 100 | c | 0 | 10 | 15 | 55 | Short-circuit | W2 | 186 | 0.007 | 550 | 50 | 2.0 | 1.0 | 1.0 | 4.0 | 170 | INV. EX. |
| 12 | 100%Ar | 0 | Yes | 259 | 26 | 87 | 70 | c | 0 | 20 | 25 | 96 | Short-circuit | W2 | 24 | 0.38 | 450 | 50 | 1.5 | 1.0 | 1.0 | 8.0 | 59 | INV. EX. |
| 13 | 100%Ar | 0 | Yes | 224 | 25 | 98 | 100 | d | 0 | 15 | 20 | 56 | Short-circuit | W2 | 78 | 0.02 | 400 | 50 | 1.5 | 1.0 | 1.0 | 6.7 | 70 | INV. EX. |
| 14 | 100%Ar | 0 | Yes | 241 | 26 | 104 | 50 | e | 0 | 15 | 20 | 125 | Short-circuit | W2 | 88 | 0.02 | 500 | 80 | 2.0 | 1.5 | 1.5 | 5.1 | 125 | INV. EX. |
| 15 | 100%Ar | 0 | Yes | 232 | 25 | 82 | 30 | a | 0 | 10 | 15 | 193 | Short-circuit | W1 | 69 | 0.04 | 350 | 50 | 2.0 | 1.0 | 1.0 | 8.2 | 110 | INV. EX. |
| 16 | 100%Ar | 0 | Yes | 171 | 23 | 213 | 60 | a | 0 | 10 | 15 | 66 | Short-circuit | W1 | 55 | 0.12 | 250 | 30 | 2.0 | 1.0 | 1.0 | 0.7 | 78 | INV. EX. |
| 17 | 100%Ar | 0 | No | 226 | 21 | - | 80 | a | 0 | 15 | 20 | 59 | Not short-circuit | W1 | - | - | - | - | - | - | - | - | - | INV. EX. |
| 18 | Ar-20%CO2 | 20 | No | 160 | 18 | - | 80 | c | 20 | 15 | 20 | 66 | Not short-circuit | W1 | - | - | - | - | - | - | - | - | - | COMP. EX. |
| 19 | Ar-20%CO2 | 20 | No | 152 | 19 | - | 100 | b | 20 | 15 | 20 | 53 | Not short-circuit | W1 | - | - | - | - | - | - | - | - | - | COMP. EX. |
| 20 | 100%Ar | 0 | No | 181 | 20 | - | 120 | a | 0 | 15 | 20 | 30 | Not short-circuit | W2 | - | - | - | - | - | - | - | - | - | COMP. EX. |

(continued)

| No. | Shielding gas | | Pulse | Average welding current I (A) | Average arc voltage V (V) | Pulse frequency (Hz) | Welding speeds (cm/min) | Steel sheets | Shielding gas Y | L (mm) | Ar gas flow rate (L/min) | Value in the middle of Formula (3) | Metal transfer mode | Wire symbol | $F_{AVE}$ (Hz) | $T_{CYC}$ (s) | $I_{PEAK}$ (A) | $I_{BASE}$ (A) | (PEAK) (ms) | tup (ms) | $t_{DOWN}$ (ms) | (BASE) (ms) | X (A·s/m) | Remarks |
|---|---|---|---|---|---|---|---|---|---|---|---|---|---|---|---|---|---|---|---|---|---|---|---|---|
| | Components | Value of $2\times[O_2]+[CO_2]$ | | | | | | | | | | | | | | | | | | | | | | |
| 21 | Ar-5%$CO_2$ | 5 | No | 245 | 21 | - | 30 | c | 5 | 15 | 20 | 207 | Not short-circuit | W2 | - | - | - | - | - | - | - | - | - | COMP. EX. |

Polarity = Direct current reverse polarity
*1. $2 \times [O_2] + [CO_2] \leq 16$ ... Formula (2)
*2. $2 \times [O_2] + [CO_2] \leq 5$ ... Formula (4)
*3. $50 \leq (I \times V/s \times (24+Y)/24 \leq 200$ ... Formula (3)
*4. Shielding gas $Y = 2 \times [O_2] + [CO_2]$
*5. $X = (I_{PEAK} \times t_{PEAK}/L)+(I_{PEAK}+I_{BASE})\times(t_{UP}+t_{DOWN})/(2\times L)$...Formula (5)

[Table 3]

| No. | Weld | | | | | Average rust area (mm²/10mm) | Fatigue strength (MPa) | Rating | Remarks |
|---|---|---|---|---|---|---|---|---|---|
| | Flank angle | | | | Weld bead | | | | |
| | $\theta$ (°) | $\theta$max (°) | $\theta$min (°) | $\theta$max $-\theta$min (°) | $S_{RATIO}$ (%) | | | | |
| 1 | 129 | 134 | 119 | 15 | 5 | 25 | 410 | A | INV. EX. |
| 2 | 117 | 123 | 105 | 18 | 4 | 47 | 320 | A | INV. EX. |
| 3 | 146 | 148 | 135 | 13 | 28 | 40 | 350 | A | INV. EX. |
| 4 | 137 | 145 | 122 | 23 | 33 | 51 | 320 | A | INV. EX. |
| 5 | 131 | 140 | 118 | 22 | 37 | 81 | 320 | A | INV. EX. |
| 6 | 113 | 120 | 109 | 11 | 48 | 98 | 320 | A | INV. EX. |
| 7 | 113 | 118 | 106 | 12 | 7 | 30 | 330 | A | INV. EX. |
| 8 | 114 | 118 | 108 | 10 | 5 | 21 | 330 | A | INV. EX. |
| 9 | 125 | 128 | 117 | 11 | 7 | 29 | 360 | A | INV. EX. |
| 10 | 102 | 110 | 98 | 12 | 7 | 23 | 330 | A | INV. EX. |
| 11 | 122 | 125 | 120 | 5 | 1 | 20 | 380 | A | INV. EX. |
| 12 | 111 | 126 | 101 | 25 | 6 | 31 | 320 | A | INV. EX. |
| 13 | 118 | 122 | 115 | 7 | 10 | 39 | 350 | A | INV. EX. |
| 14 | 108 | 120 | 103 | 17 | 9 | 35 | 340 | A | INV. EX. |
| 15 | 108 | 115 | 104 | 11 | 6 | 28 | 330 | A | INV. EX. |
| 16 | 102 | 111 | 95 | 16 | 11 | 35 | 320 | A | INV. EX. |
| 17 | 109 | 125 | 94 | 31 | 14 | 54 | 270 | B | INV. EX. |
| 18 | 128 | 130 | 127 | 3 | 55 | 126 | 180 | F | COMP. EX. |
| 19 | 116 | 121 | 111 | 10 | 62 | 133 | 170 | F | COMP. EX. |
| 20 | 98 | 107 | 93 | 14 | 25 | 35 | 170 | F | COMP. EX. |
| 21 | 97 | 109 | 94 | 15 | 41 | 86 | 140 | F | COMP. EX. |

*1. $S_{RATIO}$ = 100 $\times$ $S_{SLAG}/S_{TOE}$
*Rating:
A (Post-corrosion fatigue strength)$\geq$320MPa
B 190MPa$\leq$(Post-corrosion fatigue strength)<320MPa
F (Post-corrosion fatigue strength)<190MPa

[Table 4]

| Wire symbol | Welding wire chemical composition (mass%) | | | | | | | | |
|---|---|---|---|---|---|---|---|---|---|
| | C | Si | Mn | P | S | Ni | Cr | Ti | Mo |
| W1 | 0.070 | 0.40 | 1.67 | 0.007 | 0.005 | - | - | - | - |

(continued)

| Wire symbol | Welding wire chemical composition (mass%) | | | | | | | | |
|---|---|---|---|---|---|---|---|---|---|
| | C | Si | Mn | P | S | Ni | Cr | Ti | Mo |
| W2 | 0.068 | 0.57 | 1.06 | 0.006 | 0.006 | 0.030 | - | - | 0.600 |
| W3 | 0.060 | 0.92 | 1.40 | 0.007 | 0.014 | - | 0.025 | 0.001 | - |

As it is clear from Table 2 and Table 3, welding Nos. 1 to 17 representing INVENTIVE EXAMPLES attained a flank angle θ of 100° or more and an $S_{RATIO}$ of 50% or less. As a result, the arc welded joints that were obtained prevented rusting and had excellent post-corrosion fatigue property.

Among these INVENTIVE EXAMPLES, welding Nos. 1 to 16 resulted in a difference (θmax - θmin) of 30° or less between the maximum value θmax of the flank angle θ and the minimum value θmin of the flank angle θ. As a result, the stress concentration was relaxed, and the arc welded joints that were obtained had particularly excellent fatigue property.

Furthermore, the results of INVENTIVE EXAMPLES have confirmed that the advantageous effects described hereinabove can be obtained using any of welding wires for ultrahigh tensile strength steels (wire symbols W1 and W2 in Table 4) and welding wires for mild steels (wire symbol W3 in Table 4) .

In contrast, welding Nos. 18 to 21 representing COMPARATIVE EXAMPLES resulted in a flank angle θ of less than 100° or an $S_{RATIO}$ of more than 50%, and consequently the fatigue strength was significantly lowered by the progress of corrosion.

Incidentally, the graph in Fig. 7 illustrates relationships between the flank angle and the post-corrosion fatigue strength in EXAMPLES. In Fig. 7, the symbols "o (INVENTIVE EXAMPLES)" and "Δ (COMPARATIVE EXAMPLES)" satisfied the formula (2) described hereinabove. As illustrated in Fig. 7, the fatigue strength was increased when the flank angle was large. High fatigue strength was obtained when the flank angle was satisfied and further the slag-covered area ratio $S_{RATIO}$ was 50% or less, as compared to when the slag-covered area ratio $S_{RATIO}$ was more than 50%.

Reference Signs List

1    WELDING WIRE
2    WELDING TORCH
3    STEEL SHEET (BASE MATERIAL)
4    CORNER OF STEP
5    ARC
6    WELD BEAD
7    MOLTEN METAL (DROPLET)
8    MOLTEN POOL
9    BEAD TOE
10    BEAD-START AND BEAD-FINISH END PORTIONS
11    SLAG

**Claims**

1.    An arc welded joint having a weld formed by arc welding of an overlap of at least two steel sheets, wherein

the weld has a flank angle θ (°) of θ ≥ 100°, and
in a region extending 2.0 mm from a bead toe of the weld in a weld metal direction and also extending 2.0 mm from the bead toe in a base material direction, the slag-covered area ratio $S_{RATIO}$ (%) calculated by formula (1) is 50% or less wherein $S_{TOE}$ is the bead toe surface area ($mm^2$) that is the surface area of a weld bead in the region, and $S_{SLAG}$ is the slag surface area ($mm^2$) that is part of the bead toe surface area $S_{TOE}$ and represents the area of a region covered with a slag,

$$S_{RATIO} = 100 \times S_{SLAG}/S_{TOE} \cdots(1).$$

2. The arc welded joint according to claim 1, wherein the flank angle in the weld excluding regions extending 15 mm from a bead-start end and from a bead-finish end of the weld bead has a maximum value and a minimum value satisfying relationship $\theta max - \theta min \leq 30°$ wherein $\theta max$ is the maximum value (°) and $\theta min$ is the minimum value (°) of the flank angle.

3. An arc welding method for producing an arc welded joint according to claim 1 or 2, comprising:

   forming a weld by arc welding of an overlap of at least two steel sheets while using a shielding gas including Ar gas and an oxidizing gas, the oxidizing gas satisfying a relationship of formula (2):

$$2 \times [O_2] + [CO_2] \leq 16 \quad \cdots (2)$$

   wherein $[O_2]$ is the vol% of $O_2$ in the shielding gas, and $[CO_2]$ is the vol% of $CO_2$ in the shielding gas, and wherein
   I, V, s, and Y satisfy a relationship of formula (3):

$$50 \leq (I \times V)/s \times (24 + Y)/24 \leq 200 \quad \cdots (3)$$

   wherein I is the average welding current (A), V is the average arc voltage (V), s is the welding speed (cm/min), and Y is the value of $(2 \times [O_2] + [CO_2])$ in the formula (2) in the shielding gas.

4. The arc welding method according to claim 3, wherein the shielding gas satisfies a relationship of formula (4):

$$2 \times [O_2] + [CO_2] \leq 5 \quad \cdots (4)$$

   wherein $[O_2]$ is the vol% of $O_2$ in the shielding gas, and $[CO_2]$ is the vol% of $CO_2$ in the shielding gas, and wherein

   the steel sheets and a welding wire are intermittently short-circuited during the arc welding, and
   the average short-circuit frequency $F_{AVE}$ (Hz) during the short-circuit is 20 to 300 Hz and the maximum short-circuit cycle $T_{CYC}$ (s) during the short-circuit is 1.5 s or less.

5. The arc welding method according to claim 3 or 4, wherein the arc welding uses a pulse current as a welding current, and
   the value of X (A·s/m) calculated by formula (5) satisfies $50 \leq X \leq 250$ wherein $I_{PEAK}$ is peak current (A) of the pulse current, $I_{BASE}$ is base current (A), $t_{PEAK}$ is peak time (ms), $t_{UP}$ is rise time (ms), $t_{DOWN}$ is fall time (ms), and L is the distance (mm) between the steel sheets and a contact tip,

$$X = (I_{PEAK} \times t_{PEAK}/L) + (I_{PEAK} + I_{BASE}) \times (t_{UP} + t_{DOWN})/(2 \times L)$$

$$\cdots (5).$$

6. The arc welding method according to any one of claims 3 to 5, wherein the arc welding uses a solid wire as a welding wire.

# FIG. 1

# FIG. 2

(A)

(B)

# FIG. 3

# FIG. 4

(A)

(B)

# FIG. 5

# FIG. 6

# FIG. 7

Legend:
- ○ : INV. EX.
- △ : COMP. EX. ($S_{RATIO} \leq 50\%$)
- ▲ : COMP. EX. ($S_{RATIO} > 50\%$)

* ○ AND △ SATISFIED $2 \times [O_2] + [CO_2] \leq 16$.

Chart: FATIGUE STRENGTH (MPa) vs FLANK ANGLE (°)

## INTERNATIONAL SEARCH REPORT

| International application No. |
|---|
| **PCT/JP2022/018949** |

**A. CLASSIFICATION OF SUBJECT MATTER**

**B23K 9/00**(2006.01)i; **B23K 9/073**(2006.01)i; **B23K 9/16**(2006.01)i; **B23K 9/167**(2006.01)i
FI: B23K9/00 101A; B23K9/16 J; B23K9/167 C; B23K9/073 545

According to International Patent Classification (IPC) or to both national classification and IPC

**B. FIELDS SEARCHED**

Minimum documentation searched (classification system followed by classification symbols)

B23K9/00; B23K9/073; B23K9/16; B23K9/167

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | WO 2018/159404 A1 (JFE STEEL CORP.) 07 September 2018 (2018-09-07) paragraphs [0037]-[0042], fig. 1 | 1-3, 6 |
| A | | 4-5 |
| A | JP 2006-159273 A (NIPPON STEEL CORP.) 22 June 2006 (2006-06-22) entire text, all drawings | 1-6 |
| A | JP 2013-184216 A (KABUSHIKI KAISHA KOBE SEIKO SHO) 19 September 2013 (2013-09-19) entire text, all drawings | 1-6 |
| A | WO 2013/132550 A1 (PANASONIC CORP.) 12 September 2013 (2013-09-12) entire text, all drawings | 1-6 |

☐ Further documents are listed in the continuation of Box C.  ☑ See patent family annex.

| | | |
|---|---|---|
| * | Special categories of cited documents: | "T" later document published after the international filing date or priority date and not in conflict with the application but cited to understand the principle or theory underlying the invention |
| "A" | document defining the general state of the art which is not considered to be of particular relevance | |
| "E" | earlier application or patent but published on or after the international filing date | "X" document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" | document referring to an oral disclosure, use, exhibition or other means | |
| "P" | document published prior to the international filing date but later than the priority date claimed | "&" document member of the same patent family |

| Date of the actual completion of the international search | Date of mailing of the international search report |
|---|---|
| **06 June 2022** | **21 June 2022** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2022/018949**

| Patent document cited in search report | | | Publication date (day/month/year) | Patent family member(s) | | | Publication date (day/month/year) |
|---|---|---|---|---|---|---|---|
| WO | 2018/159404 | A1 | 07 September 2018 | KR 10-2019-0110110 | | A | |
| | | | | CN | 110337344 | A | |
| JP | 2006-159273 | A | 22 June 2006 | (Family: none) | | | |
| JP | 2013-184216 | A | 19 September 2013 | US | 2015/0027995 | A1 | |
| | | | | entire text, all drawings | | | |
| | | | | EP | 2823931 | A1 | |
| | | | | CN | 104159700 | A | |
| | | | | KR 10-2014-0122269 | | A | |
| WO | 2013/132550 | A1 | 12 September 2013 | US | 2014/0202993 | A1 | |
| | | | | entire text, all drawings | | | |
| | | | | EP | 2823926 | A1 | |
| | | | | CN | 103930231 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 3860438 B